# EUROPEAN PATENT APPLICATION

(11) **EP 2 177 845 A2**
(43) Date of publication of application: **21.04.2010**
(21) Application number: 09012699.6
(22) Date of filing: 07.10.2009
(51) Int. Cl.: F24J 2/04, F24J 2/34, F24D 11/02

(54) **Solar plant**

(30) Priority: 14.10.2008 IT PZ20080003
(71) Applicant: Marsico, Pasquale, Salvatore, 85100 Potenza (IT)
(72) Inventor: Marsico, Pasquale, Salvatore, 85100 Potenza (IT)
(74) Representative: Barberi, Vittorio

(57) **Abstract**

Thermal solar plant comprising a panel or collector (1), which receives solar energy and which is provided with an exchanger inside which a fluid, used to transfer energy, circulates, and a tank (6) used to store the accumulated energy, solar plant **characterized in that** it is provided with one or more bearing elements or crossbars (10; 10') integrated into the structure (3; 30) of the building equipped with said solar plant or being part of it.

## Description

The present invention relates to a solar plant, particularly to a solar thermal plant.

As is well-known, a solar thermal plant normally consists of a panel which receives solar energy, of an exchanger, used to transfer energy, inside which a fluid circulates and of a tank which is used to store the accumulated energy.

Well-known systems can be natural or forced circulation systems.

In the case of a natural circulation system, convection is used to let the vector fluid circulate into the solar plant; in forced circulation systems, there is a motion means for the carrier fluid, such as a pump in the case of a liquid fluid or a fan/exhauster in the case of aeriform fluids.

One of the disadvantages of the well-known systems is the use of substances such as propylene glycol (commonly known as antifreeze) as a carrier fluid since said substances may contaminate sanitary water in case they are mixed with it. The present invention uses air as a carrier fluid for solar energy, so as to eliminate all the inconveniences connected with the presence of "antifreeze" liquid in the circuits.

One of the aims of the present invention is to obtain a remarkable reduction of the maintenance and installation costs by rationalizing the use of materials and of labour and by keeping the quality and performance of the plant at a very high level. The solar plant subject of the present invention can be used to cover surfaces of any size and in various climatic contexts.

The solar plant uses entire roof pitches as a support base so as to define its lower side. In practice, as described in more detail in the following, it is possible to position steel crossbars or pre-compressed reinforced concrete crossbars onto the roof pitches or to use a steel bearing crossbar (or a pre-compressed reinforced concrete crossbar) which is part of the building to be equipped with the solar plant so that it constitutes the support base of the thermal solar plant itself. In this way, installation can be remarkably simplified and, moreover, it is possible to improve the insulation features of the roof. These results have been achieved, according to the invention, by adopting the idea of building a thermal solar plant having the features described in claim 1. Further features are the subject of the dependent claims. Some of the advantages of the present invention are described below:
- the constructive method is relatively simple and it can be carried out in different geographical areas even without highly skilled labour;
- the system may cover surfaces of any size;
- the installation of the solar plant can improve the insulation of the roof;
- the absence of antifreeze liquids in the circuits, that is to say the absence of potentially harmful liquids, with a consequent elimination of the maintenance and control of the liquids themselves (ph control, disposal of exhausted liquids and so on);
- absence of control power stations;
- absence of expansion vessels;
- elimination of the control of the operating pressure and of the corresponding safety valves;
- absence of sanitary water mixers;
- a uniform water temperature in the accumulation tank;
- extremely reduced maintenance.

Each technician who works in this field will better understand these advantages and further advantages and features of the present invention thanks to the following description and to the enclosed drawings as a practical explanation of the present invention which should not be considered in a limitative sense, wherein:
- Figs.1 and 2 schematically show a possible embodiment of a solar plant according to the invention; Fig.1 shows the solar plant in a schematic section view according to line A-A of Fig. 2; Fig.2 is a top plan view;
- Figs.3 and 4 show a solar plant according to the invention, which is schematically shown in a cross section view and in a longitudinal section view, that is orthogonal to the previous one;
- Figs.5 and 6 are relative to two cross sections which schematically show two possible embodiments of the invention;
- Fig.7 shows a partial cross-section view of a detail relative to the examples of Figs.5 and 6 represented on a different scale and combined with a further detail which is represented, only partially, in a plan view;
- Figs.8-9 and 10 schematically show a first embodiment of a tank according to the present invention; Fig.8 is a longitudinal section; Fig. 9 is a section view according to line A-A of Fig.8; Fig. 10 is a front view;
- Figs.11-12 schematically show a second embodiment of a tank according to the present invention; Fig. 11 is a longitudinal section; Fig. 12 is a section according to line A-A of Fig.11;
- Figs.13,14 schematically show a third embodiment of a tank according to the invention; Fig. 13 is a longitudinal section defined by line A-A of Fig. 14; Fig. 14 is a cross section;
- Figs.15-16 and 17 schematically show an embodiment of a valve switch device according to the invention; Fig. 15 is a lateral view; Fig.16 is a section view according to line A-A of Fig.15; Fig.17 is a section view according to line B-B of Fig.15;
- Figs.18 and 19 schematically show a possible embodiment of an absorbing surface which is part of the invention ; Fig.18 is a plan view; Fig. 19 is a section view according to lines A-A of Fig. 18, with a detail relative to the indication of an angle;
- Figs.20-21 schematically show a further possible embodiment of an absorbing surface which is part of the invention ; Fig. 20 is a plan view; Fig. 21 is a section view according to line A-A of Fig. 20, with a detail relative to the indication of an angle.

With reference to the figures of the enclosed drawings, a thermal solar plant built according to the present invention comprises a panel or a collector unit (indicated with 1 in its totality) which conveys solar energy which is absorbed by a black body (4) disposed at the base of a chamber (40) inside which the air defining the vector fluid of the solar plant is heated.

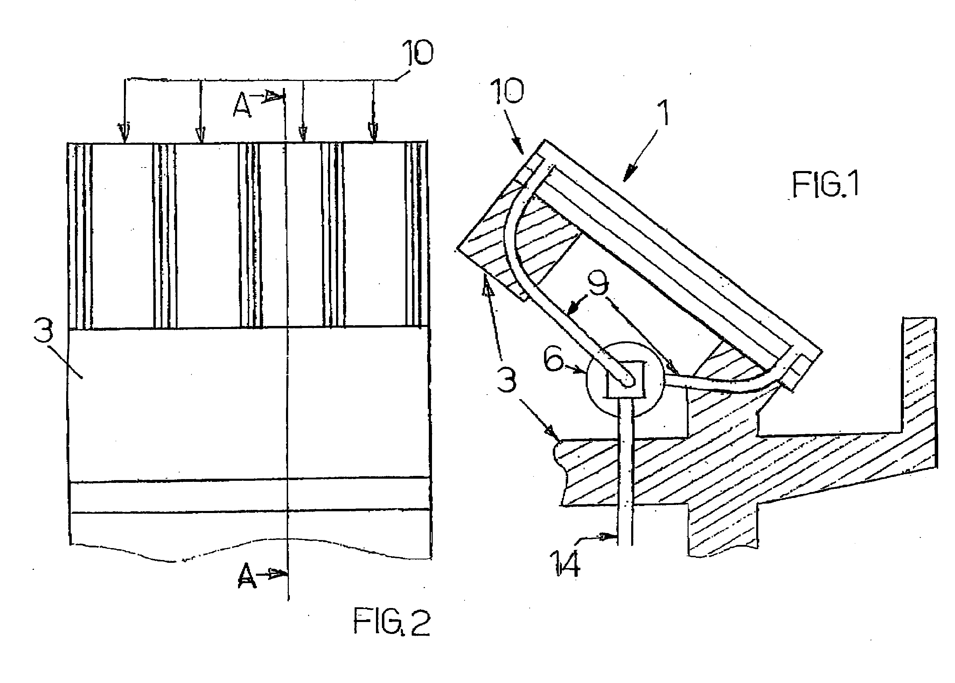

As shown in Figs.1-4, the collector (1) is connected to a plurality of ducts (9) which constitute a circuit connected to an accumulation tank (6) for hot water.

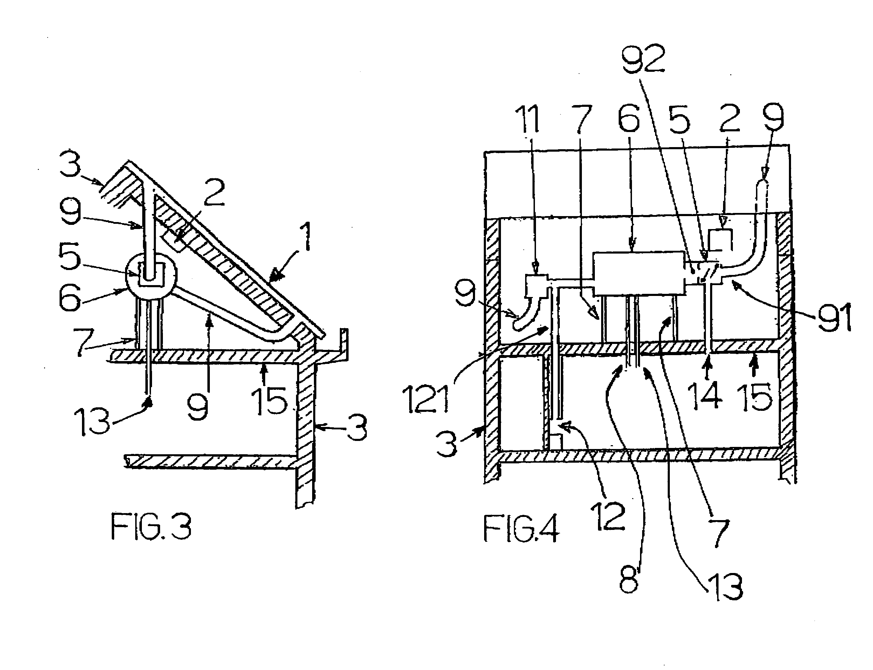

The tank (6) is supported by bearing elements (7) and is connected to a duct (4) destined to convey hot air towards the rooms to be heated, whose ceiling is indicated with numerical reference (15). In practice, the ducts (9) are connected to the collector and constitute a closed circuit passing into the tank (6) to carry out a thermal exchange with it, that is to say with the water contained in it. Moreover, the tank (6) is connected to an entry duct (8) for cold water and an exit duct (13) for heated water. Numerical references (11), (12) and (121) respectively indicate an exhauster (for example a centrifugal exhauster) and the distal and proximal portion of an air suction duct (cold air in the winter) on which the exhauster acts (11). The duct (12), (121) and the exhauster (11) are part of an air circulation circuit connected to the above hot air duct (14) which interacts with the tank (6) so as to carry out the necessary thermal exchange with the air coming from the duct (9). The exhauster (11) is connected to a thermo-regulator (2) which is schematically shown in Figs.3 and 4 so that it receives consensus for its activation. Consensus to the exhauster (11) is advantageously delivered to send hot air from 20°C into the rooms during the winter or to get hot sanitary water at 55/65° C in the summer from the accumulation tank (6).

The duct (9), as described in more detail in the following, is connected to the tank (6) by means of a valve device (5) which is provided with a direct connection with the duct (14) and with two connections (91) and (92) which respectively join it to the duct (9) and to the tank (6).

In other words, the duct (9) receives hot air from the collecting unit (1) and takes it to the tank (6) or directly to the duct (14) as described in more detail in the following. The panel or collector (1) is supported by crossbars or other bearing structures (10, 10') which are integrated into the structure (3, 30) of the building equipped with the solar plant.

The crossbars which support the collecting unit can be conveniently manufactured from steel or from pre-compressed reinforced concrete (Italian acronym CAP); said crossbars can be fixed directly to a roof pitch (as shown in the examples indicated by 10) as this solution can be adopted in the case of newly-constructed buildings.

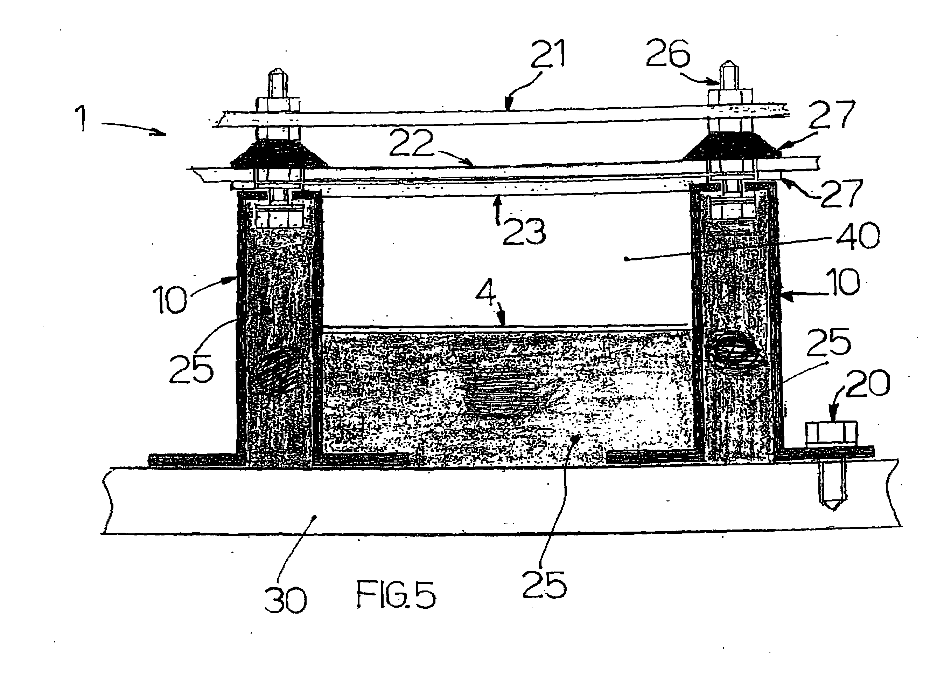

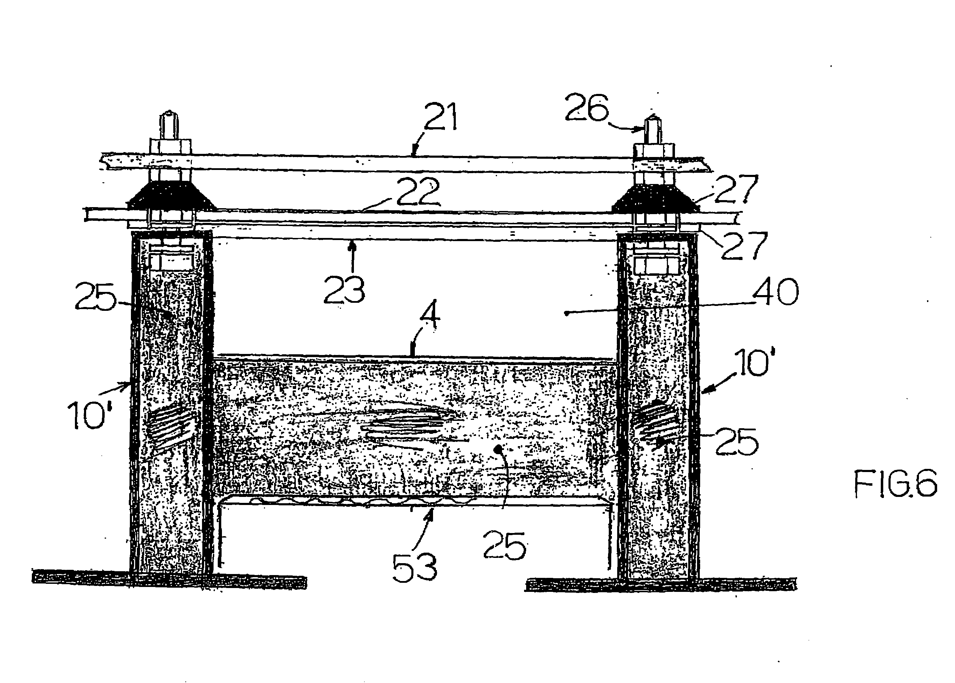

With reference to the example of Fig.5, the crossbars (10) supporting the collector are fixed to a roof pitch (30) by means of bolts (20). The drawing (which is a schematic cross section) also shows a thin bar for retaining snow (21), a solar glass sheet (22), a support crosspiece (23) for the glass, the corresponding fixing bolts (26) provided with gaskets (27). The bolts (26) fix the elements (21), (22), (23) to the crossbars (10) which contain insulating material (25). In the example of Fig.6, the crossbars (10') which contain insulating material (25) are provided with a support ribbed bottom (53). As shown in the drawings, the insulating material (25) is present underneath the absorbing body (4). In this way, a chamber is defined (40) and inside said chamber the air receives heat from solar beams, with an increase in temperature.

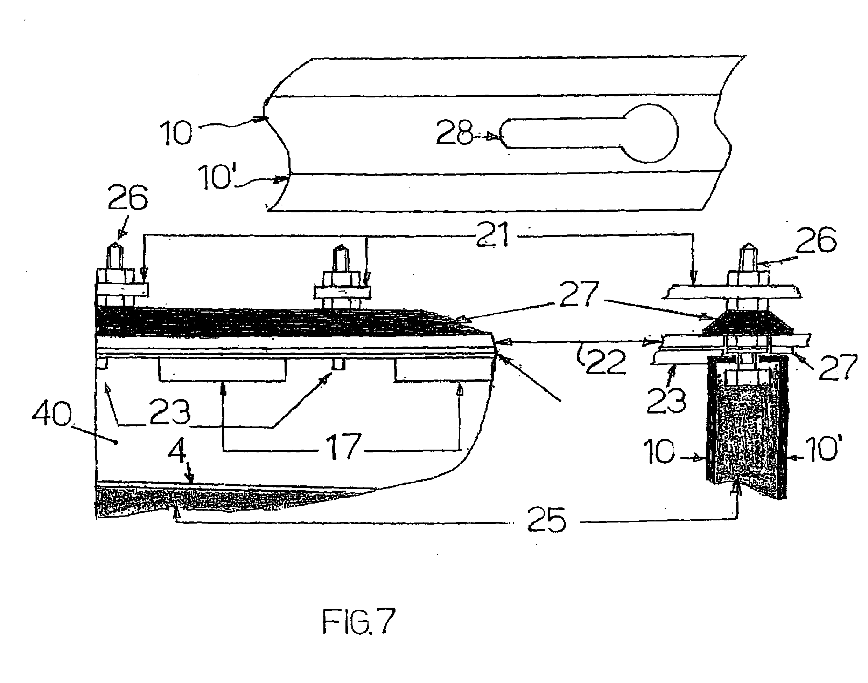

As more clearly shown in Fig 7, the chamber (40) is provided with lights or small windows (17) for air circulation at forced suction.

Moreover, the upper part of Fig.7 shows a detail relative to a slot (28) presented by the crossbar (10) or (10') for adjusting the fixing of the elements (21), (22), (23) with respect to the crossbars (10) or (10') themselves which support the entire collector (1).

As previously said, the collecting unit (1) is supported by crossbars (10), (10') which are integrated into the structure of the building or are part of it. In case said crossbars are integrated into a pre-existing structure, they will not be positioned adjacent to the roof pitches or tiles.

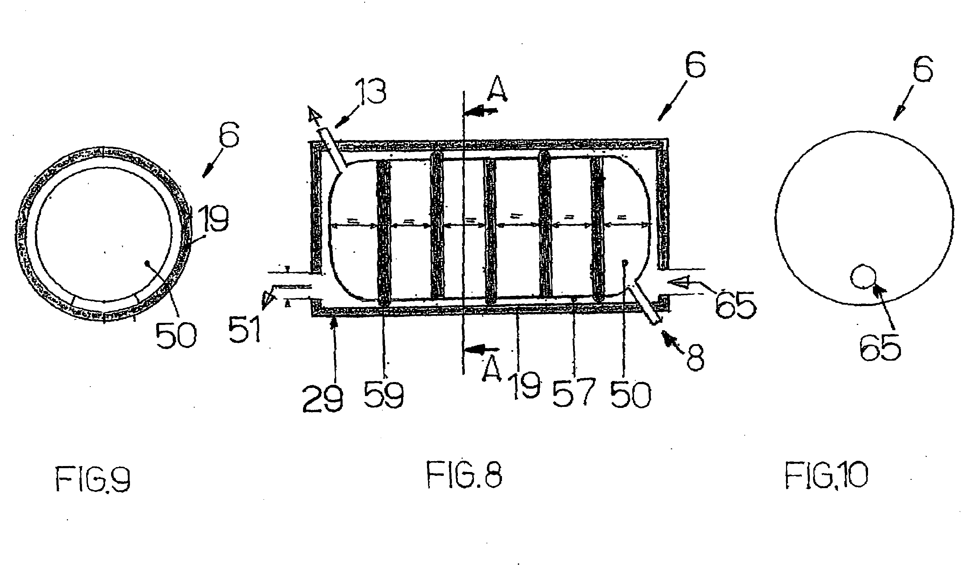

Figs 8-13 show some embodiments of the tank (6). These embodiments show: an external cover (29), an insulating/nonconductive layer (19) disposed inside the cover (29), an internal container (50), a hollow space (57) foreseen between the cover (29) and an internal container (50), an entry (65) and an exit (51) for the air as well as the connections to ducts (8) and (13) described above and destined for the entry of cold water and for the exit of heated water.

Some flow deviators (59) are foreseen inside the tank (6) and they direct the air flow coming from the entry around the internal container (50) which contains the water to be heated.

In the example of Figs 8-10, the flow deviators (59) are right-angle deviated with respect to the longitudinal axis of the internal container that is to say with respect to the air flow.

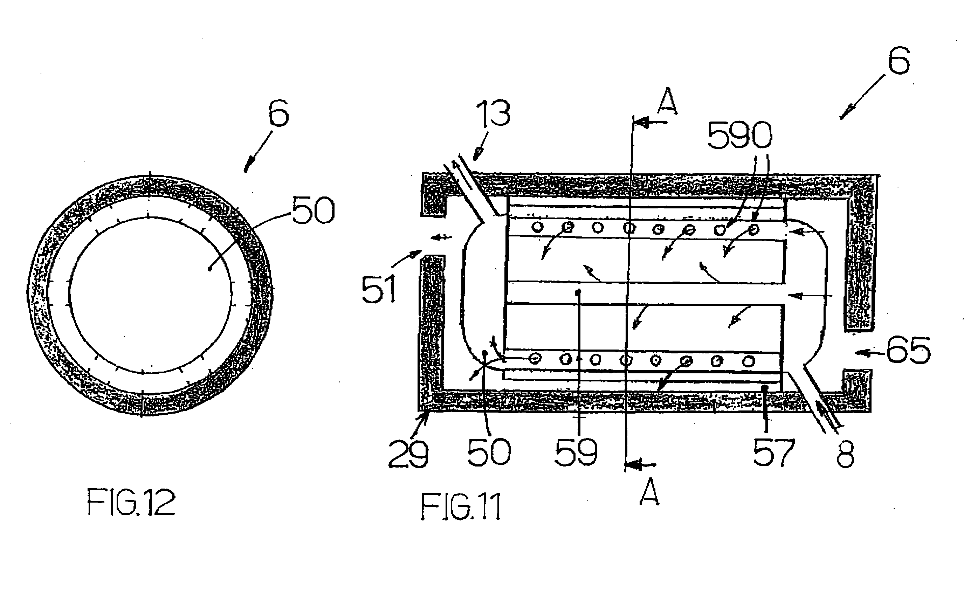

In the example shown in Fig. 11-12 the flow deviators (59) consist of axial elements provided with deviating holes (590).

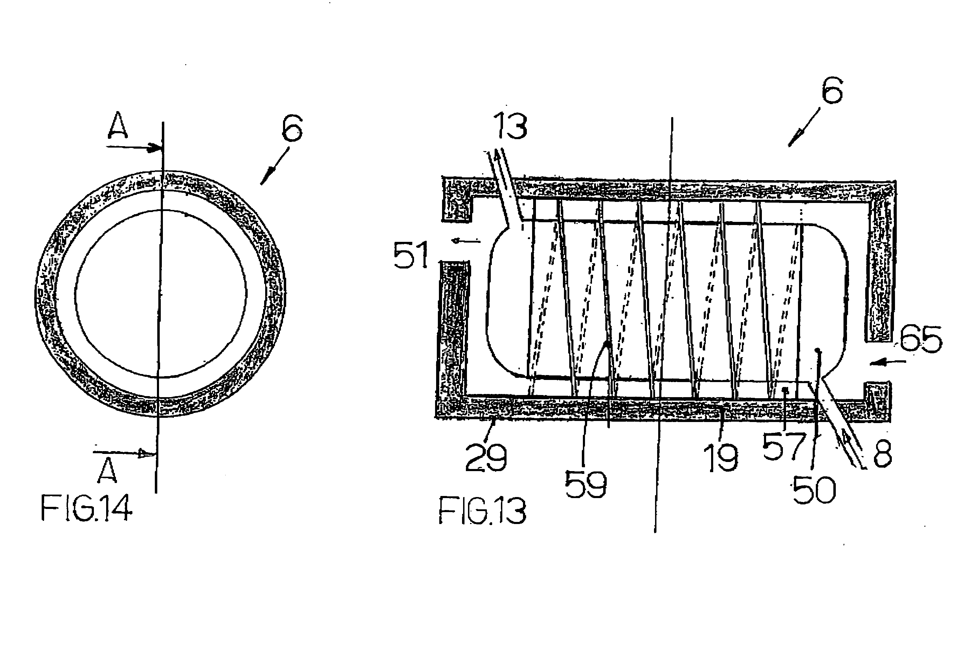

In the example of Figs 13-14 the flow deviators (59) consist of helicoidal elements.

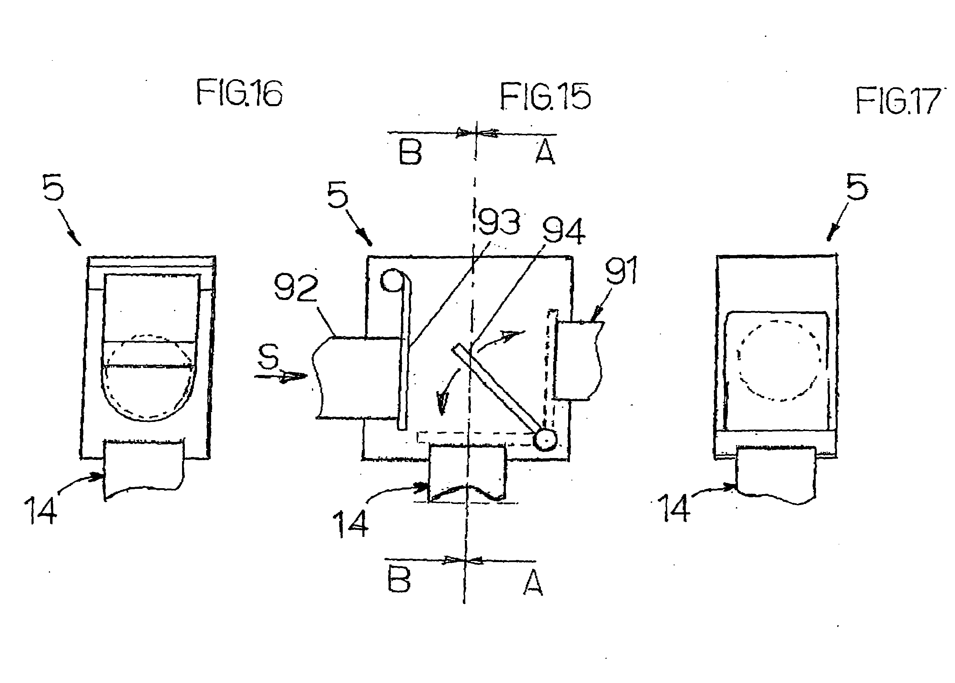

Figs 15-17 show the valve deviator device (5). As previously said, the duct (9) is connected to the tank (6) by means of the valve device (5) which is provided with a direct connection with the duct (14) and with two connections (91) and (92) which join it respectively to the duct (9) and to the tank (6).

In particular, the valve device (5) is provided with a first door (93) for closing the connection to the duct (92) (which connects to the tank 6) and with a second door (94) for the alternate closing of the duct (14) (which conveys hot air to the rooms) or of the duct (91) (coming from circuit 9). The door (93) is normally closed by gravity; in practice, in the absence of a thrust, indicated with (S) in Fig. 15, the device (5) hinders the connection between the tank (6) and the ducts (9) and/or (14).

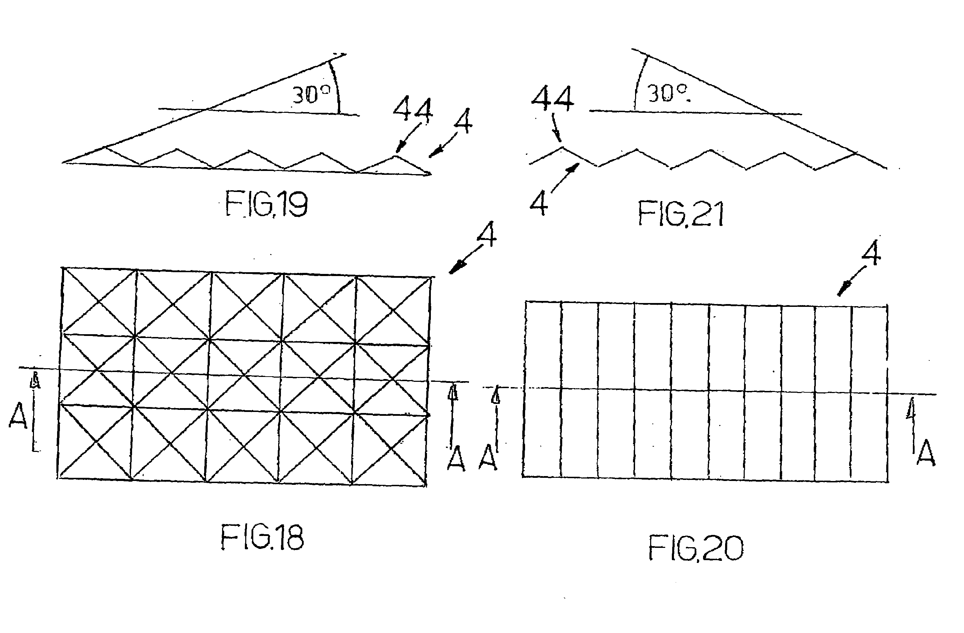

Figs 18-21 show two embodiments of the absorbing element (4); the element (4), which can advantageously be coated with a selective paint, may feature an even and continuous surface as shown in the examples of Figs 5, 6 and 7 or it can have a discontinuous shape in order to increase the absorbing/ catching surface. In the example of Figs 18-19, the surface (4) features a plurality of pyramid-shaped jutting out elements (44); in the example of Figs 20-21, the surface features a plurality of jutting out elements (44) defining a section break. A possible(and preferable) angle (of 30°) is indicated by the schematic view of Figs 19 and 21; the angle is defined by said elements (44) with respect to the horizontal plane.

The execution details may equally vary as regards shape, size, disposition of elements, kind of materials used, within the solution idea that has been adopted and within the limits of the protection offered by the present patent.

## Claims

1. Thermal solar plant comprising a panel or collector (1), which receives solar energy and which is provided with an exchanger inside which a fluid, used to transfer energy, circulates, and a tank (6) used to store the accumulated energy, solar plant **characterized in that** it is provided with one or more bearing elements or crossbars (10; 10') integrated into the structure (3; 30) of the building equipped with said solar plant or being part of it.

2. Solar plant according to claim 1 **characterized in that** said collector comprises a chamber (40) which is upperly delimited by a glass sheet (22), lowerly delimited by an absorbing sheet(4) and laterally delimited by said crossbars (10,10').

3. Solar plant according to claim 1 **characterized in that** it comprises an air circuit (9) connected to said collector (1) and to said tank (6) and an exhauster (11), operated by a thermo-regulator, acts on said circuit (9).

4. Solar plant according to claim 3 **characterized in that** it comprises a valve device (5) provided with three connection shunts for said circuit (9), for said thank (6) and for a duct (14) for conveying air to the rooms to be hated.

5. Solar plant according to claim 1 **characterized in that** said tank is provided with an entry (8) for the water to be heated and with an exit for the heated water (13) connected to an internal container (50).

6. Solar plant according to claim 1 **characterized in that** said tank (6) is provided with an internal container (50) for the water which is externally struck by the hot air flow; for said container being foreseen flow deviators which are right-angle oriented with respect to the longitudinal axis of the container (50) or consist of axial elements with deviating holes (590) or of helicoidal elements.

7. Solar plant according to claim 1 **characterized in that** it is provided with an absorbing element (4) provided with a discontinuous surface with pyramid-shaped jutting out elements or defining a section breaking.

8. Solar plant according to claim 7 **characterized in that** the profile of said elements (44) defines an angle of substantially 30° with respect to the horizontal plane.

9. Solar plant according to claim 1 **characterized in that** said crossbars (10') are disposed on the entire building structure, except for the roof pitch and the tiles.

10. Solar plant according to claim 1 **characterized in that** it comprises support crossbars (23) for the glass (22) of the panel.

11. Solar plant according to claim 1 **characterized in that** it comprises an exhauster (11) connected to a thermo-regulator (2) so that it can be enabled for sending hot air from 20°C. and hot water at 55°-65°.C.

12. Solar plant according to claim 1 **characterized in that** it is provided with an absorbing element (4) coated with selective paint.

13. Solar plant according to claim 1 **characterized in that** said heat exchanger comprises a chamber (40) provided with openings or windows (17) for the forced circulation of air.

14. Solar plant according to claim 1 **characterized in that** it comprises a thin bar for retaining snow (21).

15. Solar plant according to what has been described and shown with reference to the figures of the enclosed drawings and for the purposes disclosed above.
